# EUROPEAN PATENT SPECIFICATION

(11) **EP 0 576 627 B1**
(45) Date of publication and mention of the grant of the patent: **01.10.1997**
(21) Application number: 92915624.8
(22) Date of filing: 22.07.1992
(51) Int. Cl.: G01N 29/24, G01H 5/00

(54) **SET OF ULTRASONIC PROBEHEADS FOR MEASUREMENTS OF TIMES OF FLIGHT OF ULTRASONIC PULSES**
Ultraschallprüfkopfsatz zur Messung der Laufzeiten von Ultraschallimpulsen
ENSEMBLE DE TETES DE SONDE A ULTRASONS PERMETTANT LA MESURE DES DUREES DE VOL D'IMPULSIONS ULTRASONORES

(30) Priority: 27.07.1991 PL 290830
(43) Date of publication of application: 05.01.1994
(73) Proprietor: INSTYTUT PODSTAWOWYCH PROBLEMOW TECHNIKI, 00 049 Warszawa (PL)
(72) Inventor: BROKOWSKI, Andrzej, 02-643 Warszawa (PL); SZELAZEK, Jacek, 01-390 Warszawa (PL)
(74) Representative: Hoijtink, Reinoud
(86) International application number: PCT/PL92/00009
(87) International publication number: WO 93/03361

(56) References cited:
- EP-A- 0 080 789
- PL-B- 138 042
- US-A- 4 338 820
- US-A- 4 441 367
- US-A- 4 926 692
- Derwent's abstract, No. 86-231 675/35, SU 1 208 504, publ. week 8635

## Description

In measurements of times of flight of surface-skimming waves or surface waves well known sets of probeheads for differential measurements are in use. Such a set consists of one transmitting probehead and two identical receiving probeheads, all of them arranged along one line. Measured are times of flight between transmitter and further receiver and than between transmitter and closer receiver. The difference of these times is approximately equal to the time which takes the wave to propagate along the distance determined by centers of two receiving probeheads. The differential measurement of times eliminates the influence of any changes in times of pulse propagation in plastic wedges due to temperature changes for example. Differential sets of ultrasonic probeheads for measurements of surface-skimming or surface waves are known from Polish Patent No. 138042 "Method and device for measurements of residual stresses in the material under test" or from the paper by E. Schneider, R. Hertzer, D. Bruche "Automatisierte Bestimmungoberflachennaher Spannungszustande in Waltzen mittels Ultraschallverfahren", Mat. Konf. DGZfP, September 1989, Kiel, pp. 419-425.

Known sets of probeheads do not eliminate the influence of material under test surface roughness on measured times. Ultrasonic pulse, traveling from transmitting transducer passes the plastic wedge of transmitting probehead, propagates in the material under test, passes the plastic wedge of receiving probehead and has to cross two layers of acoustic coupling liquid between probehead wedges and material under test. The thicknesses of the liquid layers depend on the material surface roughnesses under the wedges and influence measured times of flight. In result calculated differential times depend not only on velocity of ultrasonic waves in the material under test but also on local roughness of the material surface.
Above disadvantage of known sets of probeheads make impossible the precise measurements on objects with rough, non-prepared surfaces often to be met in industrial conditions.

The object of invention is the set of ultrasonic probeheads for measurements of times of flight of ultrasonic pulses where measured times are not dependent on the thickness of acoustic coupling liquid and enables to perform precise measurements on rough surfaces.

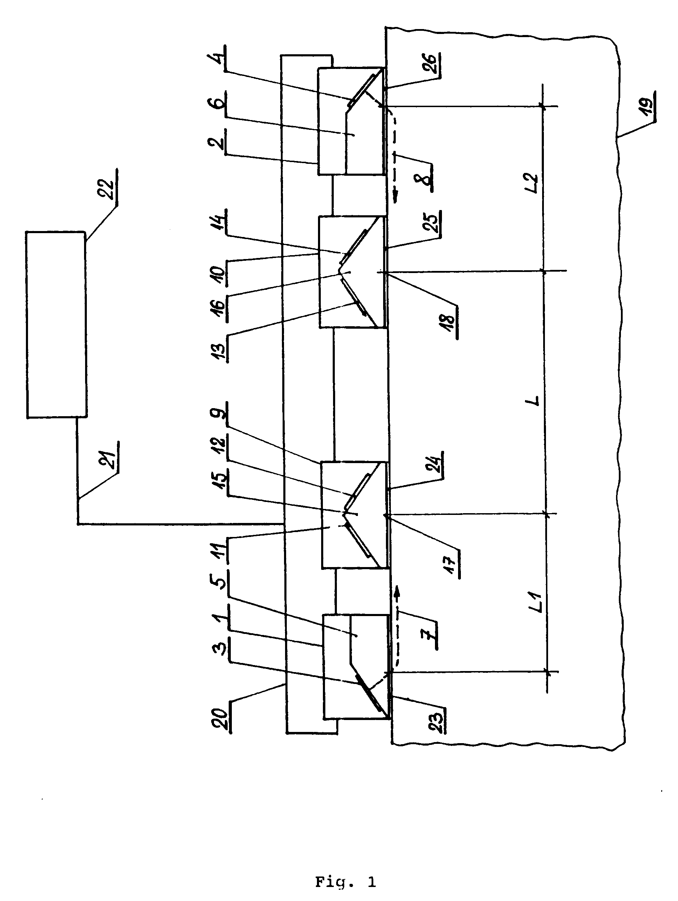

The set of probeheads according to invention and presented as an example on Fig. 1 consists of 4 probeheads, 2 of them acting as transmitters and two as receivers. All 4 probeheads are arranged along one line. Transmitting probeheads 1 and 2 , equipped with piezoelectric transducers 3 and 4 mounted on wedges 5 and 6, generate successively surface-skimming or surface waves 7 and 8 propagating along the same line but in opposite directions. Said waves are detected by receiving probeheads 9 and 10 equipped with piezoelectric transducers 11, 12, 13, and 14 mounted on wedges 15 and 16. Wedges 15 and 16 of receiving probeheads are made of the same material and their shapes and dimensions are identic. The angles of wedges depend in known way on velocity of ultrasonic wave in material under test and wave type.
The geometry of wedges 15 and 16 is such that lines normal to transducers surfaces leaded from transducer centers intersect in points 17 and 18 laying on the bottom surfaces of the wedges 15 and 16. Wedges 15 and 16 are coupled with these surfaces to the material under test 19.
All probeheads of the set are mounted in the housing 20 and connected with cable 21 with known device 22 for time of flight measurements.

The set of ultrasonic probehead is coupled with material under test with coupling liquid which fills the space between bottom surfaces of wedges and material under test surface. Ultrasonic pulse generated in transducer 3 of the transmitting probehead 1 passes wedge 5 of the probehead, the layer of coupling liquid 23, is refracted on the material under test 19 surface and propagates in the material as surface or surface-skimming wave of the given type 7. Measured is time of flight of the pulse from transducer 3 to transducer 14 in the receiving probehead 10. During the flight ultrasonic pulse has to pass also liquid layer 25 and wedge 16. Next measured is time of flight of the pulse from transducer 3 to transducer 12 in the receiving probehead 9. Pulse during the flight has to pass liquid layer 24 and wedge 15. Than measured are times of flight of wave 8 propagating in opposite direction comparing with wave 7. They are times of flight from transducer 4 to transducers 11 and 13. To reach transducers 11 and 13 in receiving probeheads 9 and 11 pulses of these waves have to pass liquid layers 24 and 25 and wedges 15 and 16.

Time of flight between transducers 3 and 14 is given as:$\text{t(3-14) = t5 + t23 + tL1 + tL + t25 + t16}$ where t denotes time of flight, the numbers denote numbers of elements, L and L1 denote distances according to Fig. 1.

Time of flight between transducers 3 and 12 is given as:$\text{t(3-12) = t5 + t23 + tL1 + t24 + t15}$

Time of flight between transducers 4 and 11 is:$\text{t(4-11) = t6 + t26 + tL2 + tL + t24 + t15}$ and between transducers 4 and 13 is:$\text{t(4-13) + t6 +t26 +tL2 + t25 +t16}$

Time of flight of the pulse along the distance L determined along the surface of the material under test 19 by points 17 and 18 is calculated as$\text{tL = [ t(3-14) - t(3-12) + t(4-11) - t(4-13) ] / 2}$ and does not depend on thicknesses of coupling liquid layers 24 and 25. Therefore time tL does not depend on height of material 19 surface irregularities but only on velocity of ultrasonic wave propagation in the material under test.

Set of ultrasonic probeheads according to the invention can find applications in precise measurements of times of flight of surface waves, surface skimming longitudinal and transverse waves polarized in vertical (SV waves) or horizontal (SH waves) directions. Such measurements are used in non-destructive ultrasonic measurements of stresses, material texture and elastic properties evaluation.

## Claims

1. Set of ultrasonic probeheads for measurements of times of flight of surface skimming waves pulses comprising:
two transmitting ultrasonic probeheads (1,2) generating ultrasonic waves which propagate in the material under test along one line but in opposite directions and
two identical receiving ultrasonic probeheads (9,10) arranged in one line with said transmitting probeheads and between them, each of said receiving probeheads containing two receiving transducers (11,12,13,14) which receive ultrasonic pulses from opposite directions, said receiving transducers (11,12,13,14) in each receiving probehead (9,10) are mounted on a common wedge (15,16) and
wedges (15,16) of receiving probeheads where distances determined by centers of transducers and point of intersection of lines normal to transducers going from their centers are equal and said points of intersection lie on the bottom surfaces of the wedges.

## Patentansprüche

1. Ultraschallprüfkopfsatz für Laufzeitmessungen von Oberflächenwellen mit:
zwei Ultraschallsendeprüfköpfen (1, 2), die in dem zu untersuchenden Material sich entlang einer Linie, jedoch in zueinander entgegengesetzte Richtungen ausbreitende Ultraschallwellen erzeugen, und
zwei gleichen, in einer Reihe mit den Sendeprüfköpfen und zwischen diesen angeordneten Ultraschall-Empfangsprüfköpfen (9, 10), wobei jeder der Empfangsprüfköpfe je zwei Aufnehmer (11, 12, 13, 14) aufweist, die Ultraschallimpulse aus zueinander entgegengesetzten Richtungen empfangen, wobei die Aufnehmer (11, 12, 13, 14) in jedem Empfangsprüfkopf (9, 10) auf einem gemeinsamen Keil (15, 16) angebracht sind, und
Keilen (15, 16) der Empfangsprüfköpfe an Stellen, an denen die von der Mitte der Aufnehmer und dem Schnittpunkt der von der Mitte der Aufnehmer ausgehenden und zur Fläche der Aufnehmer normalen Linien bestimmten Abstände gleich sind und die Schnittpunkte auf den Bodenflächen der Keile liegen.

## Revendications

1. Ensemble de têtes de sonde à ultra-sons pour la mesure du temps de vol d'impulsions d'ondes affleurant une surface comprenant :
- deux têtes (1, 2) de sonde à ultra-sons de transmission générant des ondes ultra-sons qui se propagent dans le matériau à tester le long d'une Ligne mais dans des sens opposés et
- deux têtes (9, 10) de sonde à ultra-sons de réception identiques agencées sur une Ligne avec lesdites têtes de sonde de transmission et entre elles, chacune desdites têtes de sondes de réception contenant deux transducteurs (11, 12, 13, 14) de réception qui reçoivent les impulsions ultra-sons depuis des sens opposés, lesdits transducteurs (11, 12, 13, 14) de réception dans chaque tête (9, 10) de sonde de réception sont montés sur un coin commun (15, 16) et sur des coins (15, 16) des têtes de sondes de réception, les distances déterminées par des centres des transducteurs et par un point d'intersection de Ligne normale aux transducteurs depuis leur centre étant égales et lesdits points d'intersection étant situés sur les surfaces inférieures des coins.
